Europäisches Patentamt

European Patent Office

Office européen des brevets

(19)

(11) **EP 1 649 547 B1**

(12) **FASCICULE DE BREVET EUROPEEN**

(45) Date de publication et mention
de la délivrance du brevet:
**13.12.2006 Bulletin 2006/50**

(21) Numéro de dépôt: **04767918.8**

(22) Date de dépôt: **27.07.2004**

(51) Int Cl.:
***H01Q 13/10*** (2006.01)

(86) Numéro de dépôt international:
**PCT/FR2004/050357**

(87) Numéro de publication internationale:
**WO 2005/013419 (10.02.2005 Gazette 2005/06)**

(54) **ANTENNE PLANAIRE A FENTE A DIVERSITE DE RECEPTION**

DIVERSITY-EMPFANG-SCHLITZ-FLACHPLATTENANTENNE

DIVERSITY RECEPTION SLOTTED FLAT-PLATE ANTENNA

(84) Etats contractants désignés:
**DE FR GB IT**

(30) Priorité: **30.07.2003 FR 0309366**

(43) Date de publication de la demande:
**26.04.2006 Bulletin 2006/17**

(73) Titulaire: **Thomson Licensing**
**92100 Boulogne-Billancourt (FR)**

(72) Inventeurs:
• **THUDOR, Franck**
**F-35000 Rennes (FR)**
• **LE BOLZER, Françoise**
**F-35000 Rennes (FR)**
• **MINARD, Philippe**
**F-35250 Saint-Medard-sur-Ille (FR)**

(74) Mandataire: **Ruellan-Lemonnier, Brigitte**
**THOMSON**
**European Patent Operations**
**46, Quai Alphonse Le Gallo**
**92100 Boulogne Billancourt (FR)**

(56) Documents cités:
**EP-A- 1 291 971**

• **ARAI H ET AL: "Flat antennas for indoor cellular
system" DIGEST OF THE ANTENNAS AND
PROPAGATION SOCIETY INTERNATIONAL
SYMPOSIUM. SEATTLE, WA., JUNE 19 - 24, 1994,
NEW YORK, IEEE, US, vol. VOL. 3, 20 juin 1994
(1994-06-20), pages 344-347, XP010142146 ISBN:
0-7803-2009-3**

EP 1 649 547 B1

**Description**

La présente invention concerne une antenne planaire à diversité de rayonnement. Elle concerne plus particulièrement une antenne utilisable dans le domaine des transmissions sans fil, notamment dans le cadre de transmissions dans un milieu clos ou semi-clos tel que les milieux domestiques, les gymnases, les studios de télévision, les salles de spectacles ou similaires.

Dans les systèmes de transmission sans fil à haut débit connus, les signaux transmis par l'émetteur atteignent le récepteur selon une pluralité de trajets résultant des nombreuses réflexions du signal sur les murs, les meubles ou similaires. Lors de leur combinaison au niveau du récepteur, les différences de phase entre les différents rayons ayant parcouru des trajets de longueur différente donnent lieu à une figure d'interférence susceptible de provoquer des évanouissements ou une dégradation importante du signal.

Or, l'emplacement des évanouissements change au cours du temps en fonction des modifications de l'environnement telles que la présence de nouveaux objets ou le passage de personnes. L'évanouissement du aux multitrajets peut entraîner des dégradations importantes tant au niveau de la qualité du signal reçu qu'au niveau des performances du système. Pour lutter contre ces phénomènes d'évanouissements, la technique la plus souvent utilisée est une technique mettant en oeuvre la diversité spatiale.

Cette technique consiste, entre autres, à utiliser une paire d'antennes à large couverture spatiale reliées par des lignes d'alimentation à un commutateur. Toutefois, l'utilisation de ce type de diversité nécessite un espacement minimum entre les éléments rayonnants pour assurer une décorrélation suffisante de la réponse canal vue à travers chaque élément rayonnant. Un inconvénient inhérent à son implémentation est la distance entre les éléments rayonnants qui présente un coût, notamment en terme d'encombrement et de substrat.

Pour remédier à ce problème, d'autres solutions ont été proposées. Certaines de ses solutions utilisent la diversité de rayonnement comme décrit par exemple, dans la demande de brevet français A-2 828 584 au nom de la demanderesse.

Le document EP 1 291 971 décrit une antenne à fente à lignes commutées.

La présente invention propose une nouvelle antenne de type planaire à diversité de rayonnement.

Ainsi, la présente invention concerne une antenne planaire réalisée sur un substrat comportant une fente de forme fermée dimensionnée pour fonctionner à une fréquence donnée et qui est placée dans un plan de court-circuit d'au moins une ligne d'alimentation. Dans cette antenne, le périmètre de la fente est choisi tel que $p = k\lambda s$ où k est un entier supérieur à 1 et $\lambda s$ la longueur d'onde guidée dans la fente. D'autre part, elle comporte au moins une première ligne d'alimentation placée dans une zone de circuit ouvert de la fente et une seconde ligne d'alimentation placée à une distance $d = (2n+1) \lambda s/4$ de la première ligne, avec n un entier supérieur ou égal à zéro.

Selon un premier mode de réalisation, chaque ligne d'alimentation est terminée par un circuit ouvert et est couplée avec la fente selon un couplage ligne/fente tel que la longueur de la ligne après la transition est égale à $(2k'+1)\lambda m/4$ où $\lambda m$ est la longueur d'onde guidée sous la ligne et k' un entier positif ou nul. Le couplage ligne/fente peut aussi être réalisé de sorte que la ligne microruban soit terminée par un court-circuit situé à $2k''\lambda m/4$ où $\lambda m$ est la longueur d'onde guidée sous la ligne et k'' un entier positif ou nul.

Selon un deuxième mode de réalisation, chaque ligne d'alimentation est couplée magnétiquement avec la fente selon une transition ligne/fente tangentielle.

D'autre part, la fente peut être de forme annulaire, carrée, rectangulaire, polygonale, en forme de trèfle. Si la fente est de forme rectangulaire, les lignes d'alimentation peuvent être équidistantes d'un axe de symétrie de la fente ou une des lignes d'alimentation est positionnée selon un axe de symétrie de la fente.

D'autres caractéristiques et avantages de la présente invention apparaîtront à la lecture de la description faite ci-après de divers modes de réalisation, cette description étant faite avec référence aux dessins ci-annexés dans lesquels :

Figure 1 est une vue schématique en plan de dessus d'un premier mode de réalisation.
Figure 2 est une courbe donnant les paramètres de l'antenne de la figure 1.
Figures 3a et 3b représentent respectivement les diagrammes de rayonnement de l'antenne de la figure 1 lorsqu'elle est alimentée respectivement par l'accès 1 ou par l'accès 2.
Figure 4 est une coupe des diagrammes de rayonnement des figures 3.
Figure 5 représente les courbes d'isolation S12 pour un second accès à 45° ou à 135°.
Figure 6 est une vue schématique en plan de dessus d'un autre mode de réalisation d'une antenne conforme à l'invention.
Figures 7a et 7b représentent respectivement les diagrammes de rayonnement de l'antenne de la figure 6 lorsqu'elle est alimentée respectivement par l'accès 1 ou par l'accès 2.
Figures 8a et 8b représentent les paramètres S de l'antenne de la figure 6 pour différentes valeurs de la longueur du quart d'onde.
Figure 9 est une vue schématique en plan de dessus d'un autre mode de réalisation d'une antenne conforme à l'invention.
Figure 10 représente les paramètres S de l'antenne de la figure 9.
Figures 11a et 11b représentent respectivement les diagrammes de rayonnement de l'antenne de la figure 9.

Figure 12 est une vue en plan schématique de diverses formes pour l'antenne.

Figure 13 est une vue en plan schématique d'encore un autre mode de réalisation de l'invention.

Figure 14 est une vue schématique d'une antenne conforme à l'invention intégrant un accès Tx et deux accès Rx.

Pour simplifier la description, dans les figures, les mêmes éléments portent les mêmes références.

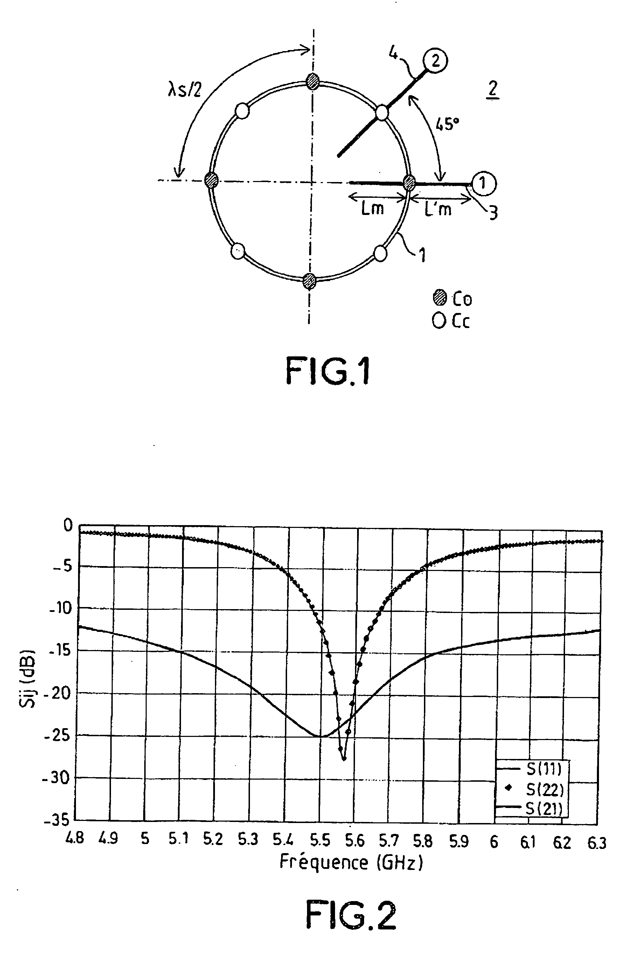

Les figures 1 à 5 concernent un premier mode de réalisation de l'invention. Comme représenté sur la figure 1, l'antenne planaire est constituée par une fente annulaire 1 réalisée sur un substrat 2 par gravure d'un plan de masse non-représenté. L'antenne fonctionne sur un mode supérieur, plus particulièrement sur son premier mode supérieur. De ce fait, le périmètre de la fente annulaire 1 est égal à $2\lambda s$ où $\lambda s$ est la longueur d'onde guidée dans la fente. De manière générale, le périmètre de la fente est tel que $p = k\lambda s$ avec $k > 1$.

Comme représenté sur la figure 1, l'excitation de la fente est effectuée à l'aide d'une ligne d'alimentation 3 réalisée en technologie microruban. La ligne 3 croise la fente de manière à obtenir un couplage entre la ligne microruban et la fente selon la méthode décrite par Knorr. De ce fait, la longueur Lm de la ligne 3 est égale à environ $(2k'+1) \lambda m/4$ où $\lambda m$ est la longueur d'onde guidée sous la ligne et $k'$ un entier positif ou nul, le plus souvent $Lm = \lambda m/4$. De plus, comme représenté sur la figure 1, la répartition des champs dans la fente annulaire présente des zones de champ maximum (zones de CO pour Circuit Ouvert) et de champ minimum (zones de CC pour Court-Circuit). La ligne d'alimentation 3 croise la fente annulaire 1 dans une zone de circuit ouvert. Du fait du positionnement de la ligne d'alimentation et du périmètre de la fente annulaire, la distance entre deux zones CO ou deux zones CC est de $\lambda s/2$. Cette répartition des champs dans la fente détermine le diagramme de rayonnement de l'antenne. Le rayonnement est dans le plan du substrat, contrairement à la fente annulaire fonctionnant sur son mode fondamental, pour laquelle le rayonnement est perpendiculaire au substrat. Selon une variante, la ligne d'alimentation 3 se termine par un court-circuit. Dans ce cas, la longueur de la ligne (Lm) est choisie telle que $Lm = k''\lambda m/4$, avec $k''$ un entier positif ou nul.

Conformément à l'invention, une seconde ligne d'alimentation 4 réalisée en technologie microruban et croisant la fente selon la méthode Knorr est positionnée au niveau d'une zone de CC. La longueur de la ligne d'alimentation 4 est déterminée selon les règles mentionnées ci-dessus. De ce fait, quand l'accès est réalisé par la ligne 4, on obtient un second diagramme de rayonnement qui est complémentaire du premier. De manière plus spécifique, la seconde ligne se trouve à +/- 45° ou à +/- 135° par rapport à la première ligne, à savoir à une distance d tel que $d = (2n+1) \lambda s/4$. Cette position relative des deux accès permet d'obtenir un bon niveau d'isolation.

On donnera ci-après les dimensions prises pour un mode de réalisation conforme à celui de la figure 1 qui a été simulé en utilisant le logiciel IE3D de la société Zeland. Sur un substrat Rogers RO4003 présentant un $\varepsilon r = 3,38$, une tangente de pertes $Tan\Delta = 0,0022$ et une hauteur $H = 0,81$ mm, a été réalisée une antenne telle que représentée sur la figure 1. Cette antenne est constituée par une fente annulaire présentant un diamètre interne $Rint = 13,4$ mm et un diamètre externe $Rext = 13,8$ mm, à savoir un diamètre moyen $Rmoy = 13,6$ mm. La largeur de la fente est égale à $Ws = 0,4$ mm. Les lignes d'alimentation sont réalisées en technologie microruban et présentent une largeur $Wm = 0,3$ mm et une longueur $Lm = \lambda m/4$ telle que $Lm = Lm' = 8,25$ mm.

Comme représenté sur la figure 1, la distance entre les deux accès 1 et 2 lorsque la fente est un cercle, correspond à $1/8^{ème}$ du périmètre soit $2\pi rmoyen/8 = 10.68$ mm. Cela correspond à un quart de longueur d'onde guidée dans la fente ($\lambda s/4 = 10,66$ mm). Au niveau des accès ❶ et ❷ d'alimentation des lignes 3, 4, l'impédance est de 50 ohms. Sur la figure 2, on a représenté les résultats obtenus concernant les paramètres S d'isolation et d'adaptation en fonction de la fréquence. On voit dans ce cas qu'on obtient une isolation aux alentours de -20dB.

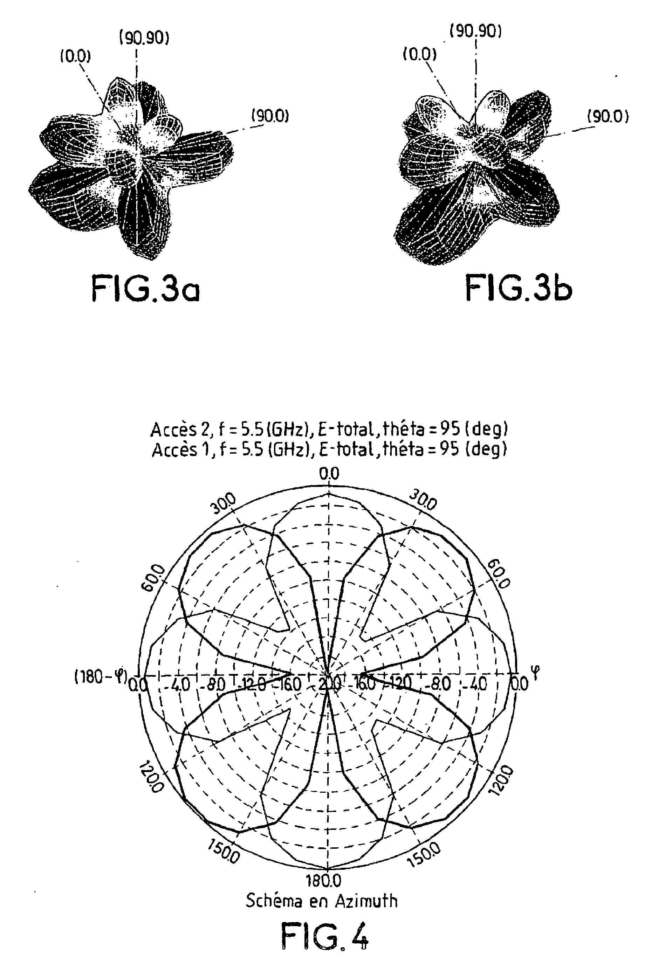

D'autre part, d'après les diagrammes de rayonnement représentés sur les figures 3a et 3b, on distingue quatre lobes orientés selon des directions Ox et Oy lorsque l'accès ❶ est utilisé, comme représenté sur la figure 3a tandis que lorsque l'accès ❷ est utilisé, les lobes se trouvent tournés de 45°, comme représenté sur la figure 3b. On obtient de ce fait deux diagrammes de rayonnement complémentaires, comme représenté sur la figure 4 qui donne une coupe dans le plan $\vartheta = 95°$ des diagrammes de rayonnement présentés sur les figures 3a et 3b.

On remarquera aussi qu'avec cette antenne, le rayonnement se fait dans le plan du substrat, ce qui permet d'avoir une couverture horizontale pour une utilisation mono-étage par exemple.

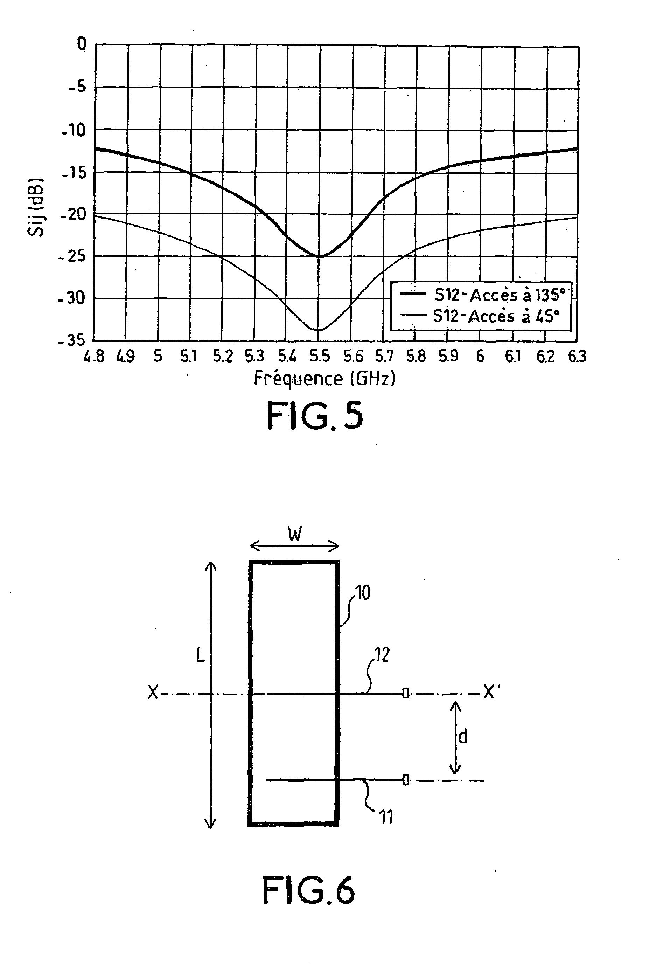

Conformément à la présente invention, le second accès, à savoir la ligne microruban 4, peut être placé à +/- 135° (+/-$3\lambda s/4$) par rapport au premier accès, à savoir la ligne d'alimentation 3. Cela permet d'obtenir une amélioration d'environ 8dB du niveau d'isolation, comme représenté sur la figure 5 entre les deux courbes S12 (Accès à 135°) et S12 (Accès à 45°).

On décrira maintenant avec référence aux figures 6 à 8, un autre mode de réalisation d'une antenne conforme à la présente invention. Dans ce cas, comme représenté sur la figure 6, au lieu d'avoir une fente de forme circulaire, on utilise une fente 10 de forme rectangulaire. La longueur de la forme rectangulaire est telle que $p = 2\lambda s = 2(W+L)$ où W correspond à la largeur du rectangle et L à la longueur du rectangle. De manière plus générale, $p = k\lambda s = 2(W+L)$. Dans ce cas, comme représenté sur la figure 6, la fente de forme rectangulaire est alimentée par deux lignes d'alimentation 11 et 12 réalisées en technologie microruban. L'alimentation se fait par couplage ligne/fente selon la méthode décrite par Knorr et mentionnée ci-dessus.

Conformément à l'invention, la première ligne d'alimentation 12 est positionnée sur un axe de symétrie de la structure, à savoir l'axe x, x' tandis que la seconde ligne d'alimentation, à savoir la ligne 11 est positionnée à une distance $d = (2n+1) \lambda s/4$ avec n un entier supérieur ou égal à zéro. Dans ces conditions, on n'obtient pas l'accès de la ligne d'alimentation 11 par symétrie de l'accès réalisé par la ligne d'alimentation 12. Cette asymétrie se retrouve au niveau de l'adaptation des ports. En effet, il apparaît un déséquilibre entre l'adaptation S11 et S22 en terme de fréquence centrale et de bande d'adaptation.

Dans ce cas, la fréquence peut être recentrée en modifiant le quart d'onde (Lm'Wm') situé entre le port d'accès et la transition ligne-fente comme cela sera expliqué ci-après.

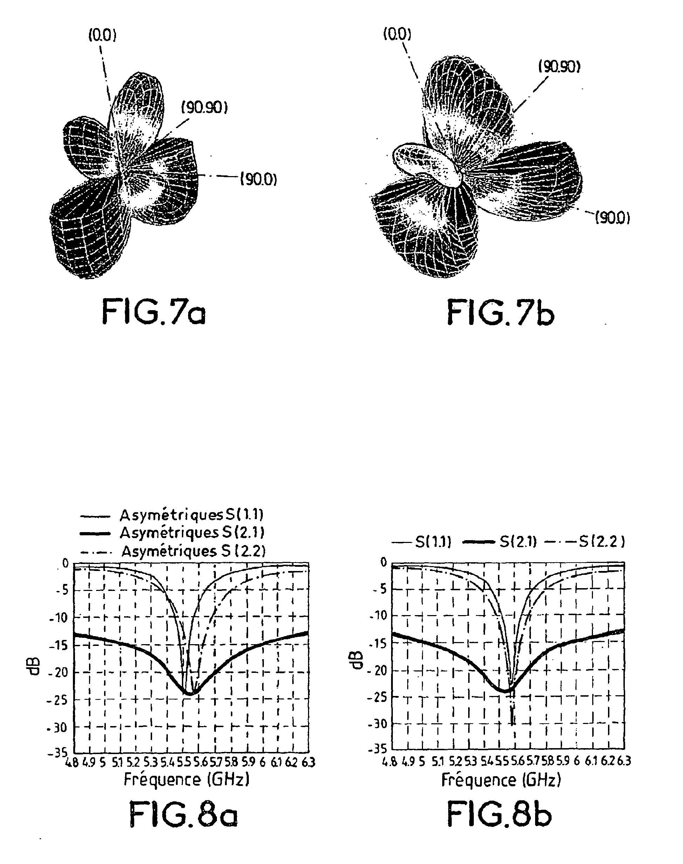

Avec une forme rectangulaire telle que représentée sur la figure 6, on obtient des diagrammes de rayonnement tels que représentés sur les figures 7a pour une alimentation par la ligne 12 ou 7b pour une alimentation par la ligne 11. On s'aperçoit que les diagrammes obtenus sont modifiés par rapport au diagramme d'une fente circulaire mais restent complémentaires. Ainsi, au travers de la forme de la fente, il est possible de contrôler les diagrammes de rayonnement.

On donnera ci-après un mode de réalisation pratique d'une antenne telle que représentée à la figure 6. Cette antenne a été simulée en utilisant le logiciel IE3D avec les dimensions suivantes en millimètre :

$$L = 32{,}92 \text{ mm}$$

$$W = 11{,}24 \text{ mm}$$

$$D = 18{,}84 \text{ mm}$$

$$Ws = 0{,}4 \text{ mm}$$

$$Lm = Lm' = 8{,}85 \text{ mm}$$

$$Wm = Wm' = 0{,}15 \text{ mm}.$$

Comme représenté sur les courbes de la figure 8a, on voit que dans ce cas, il existe deux pics d'adaptation qui ne sont pas centrés sur la même fréquence. Pour obtenir un centrage des deux pics, on a donc modifié la longueur du quart d'onde de l'accès 1 tel que Lm' = 7,85 mm et Wm' = 0,75 mm. Dans ce cas, on obtient les paramètres S de la figure 8b. Le quart d'onde de l'accès correspondant à la ligne 11 n'ayant pas été modifié, les deux pics d'adaptation se retrouvent centrés sur la même fréquence.

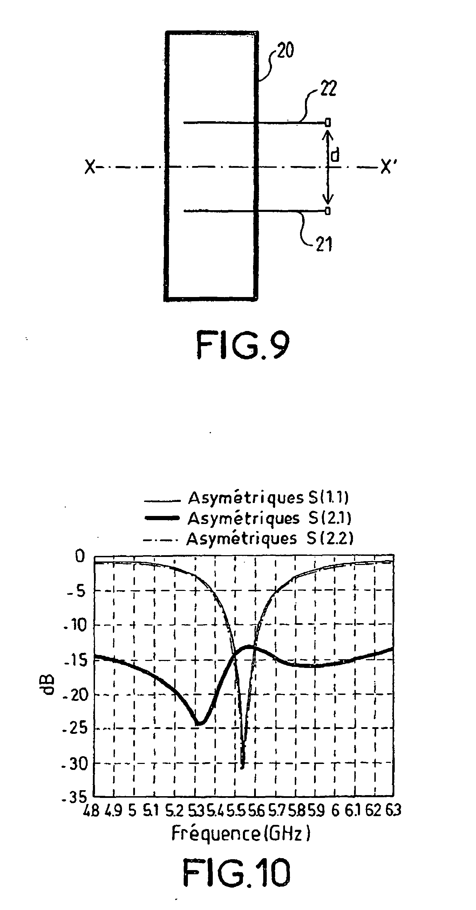

On décrira ci-après un troisième mode de réalisation avec référence aux figures 9 à 11. Dans ce cas, l'antenne constituée par une fente de forme fermée est réalisée par une fente rectangulaire 20 présentant deux accès formés par les lignes d'alimentation 21, 22 qui sont symétriques par rapport à la ligne x x'. Avec cette structure à accès symétrique, on obtient une adaptation équilibrée si le périmètre p de la fente rectangulaire est choisi tel que $p = 2\lambda s = 2(W+L)$ avec W la largeur du rectangle et L sa longueur, $\lambda s$ étant la longueur d'onde guidée dans la fente. Comme mentionné ci-dessus, p peut aussi être choisi tel que $p = k\lambda s$. De plus, la distance entre l'accès de la ligne 22 et l'accès de la ligne 21 est telle que $d = (2n+1) \lambda s/4$ avec n un entier supérieur ou égal à zéro et les accès formés par les lignes 21 et 22 sont équidistants d'un axe de symétrie XX' de la fente rectangulaire.

Dans ce cas, comme représenté sur la figure 10 qui donne les paramètres S de la fente rectangulaire avec des accès symétriques, les deux pics d'adaptation sont exactement superposés mais le niveau d'isolation est plus élevé que pour l'antenne constituée par une fente rectangulaire à accès asymétrique telle que représentée à la figure 6.

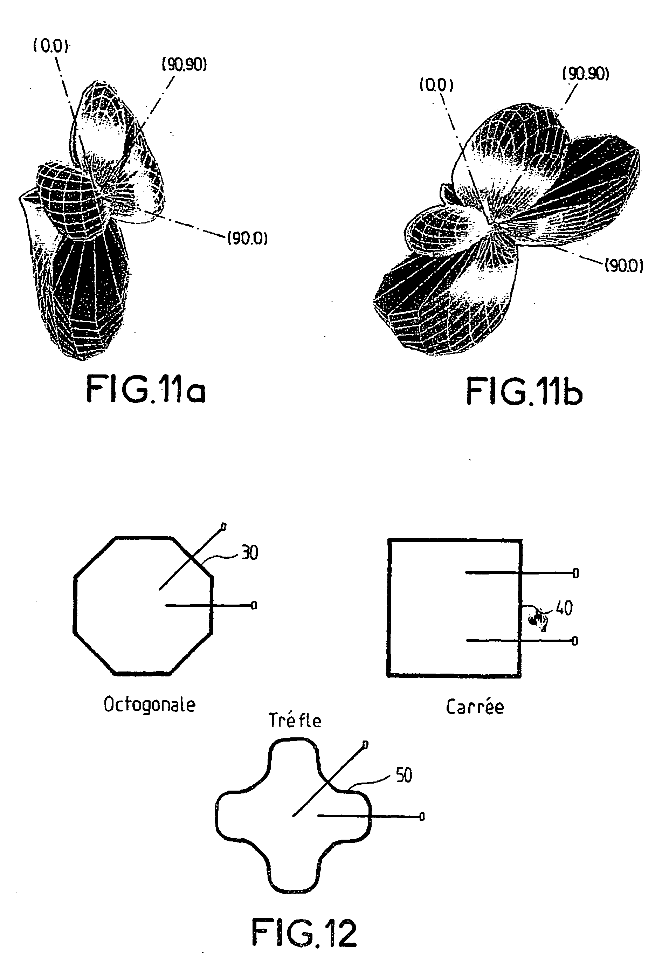

La structure d'antenne de la figure 9 donne des diagrammes de rayonnement différents selon l'accès utilisé, comme représenté par les diagrammes de la figure 11a et 11b.

Les modes de réalisation représentés ci-dessus concernent des antennes planaires constituées par une fente de forme fermée, annulaire ou rectangulaire. Toutefois, comme représenté sur la figure 12, d'autres formes fermées peuvent être utilisées pour l'antenne fente, notamment une forme orthogonale 30, une forme carrée 40, une forme en trèfle 50. Une des conditions de fonctionnement est que le périmètre de la fente soit un multiple entier k supérieur ou égal à 2 de la longueur d'onde guidée dans la fente $p = k\lambda s$ et que la distance d entre les accès soit telle que $d = 2(n+1) \lambda s/4$ avec n entier supérieur ou égal à zéro.

Dans ce cas, on utilise un mode supérieur de la fente, ce qui permet d'obtenir les diagrammes de rayonnement complémentaires. Notamment, les structures proposées rayonnent dans le plan du substrat, ce qui n'est pas le cas avec une antenne fente fonctionnant sur son mode fondamental.

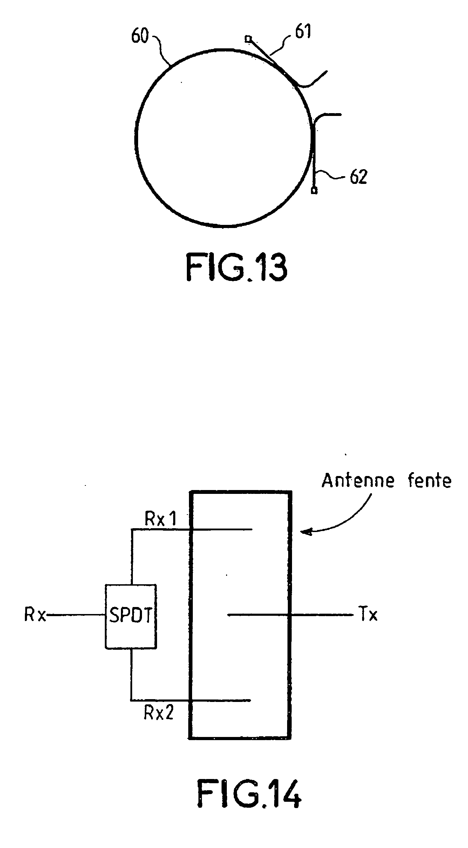

Selon une variante de la présente invention telle que représentée à la figure 13, l'antenne-fente 60 qui, dans ce mode de réalisation, est constituée par un anneau peut être alimentée de manière tangentielle, comme représenté par les lignes d'alimentation 61, 62. Dans ce cas, les mêmes règles de conception sont utilisées. L'avantage d'une alimentation tangentielle est d'avoir des lignes d'alimentation en dehors de la fente et d'augmenter la largeur de bande.

Conformément à la présente invention et comme représenté sur la figure 14, dans le cas où l'antenne fente de forme fermée est constituée notamment par un rectangle ou un carré, il est possible de réaliser une structure permettant un fonctionnement en réception/émission avec une bonne isolation et une diversité d'ordre 2 en réception. L'isolation Rx/Tx obtenue est celle donnée à la figure 8 dans le cas d'une fente rectangulaire. Le diagramme de rayonnement de l'antenne alimentée par l'accès Tx correspond à celui de la figure 7a et celui de l'antenne alimentée par l'accès Rx1 correspond au diagramme de la figure 7b. De même le diagramme de l'antenne alimentée par l'accès Rx2 est symétrique par rapport à l'axe Ox de celui du diagramme représenté à la figure 7b. La distance entre les deux accès Rx est de $\lambda s/2$ ou plus généralement $k'''\lambda s/2$ avec $k'''$ un entier supérieur à 0. De ce fait, l'isolation n'est pas intrinsèquement bonne entre ces deux accès. On utilisera un dispositif de commutation tel que le circuit SPDT au niveau de l'accès Rx.

L'utilisation de ce type de structure permet donc d'obtenir un bon niveau d'isolation et une diversité d'ordre 2 en réception avec un encombrement très faible lorsqu'un dispositif de commutation intégré est utilisé.

Il est évident pour l'homme de l'art que des modifications peuvent être apportées aux structures décrites ci-dessus sans sortir du cadre des revendications ci-jointes. Notamment, les lignes d'alimentation peuvent être réalisées en utilisant d'autres techniques telles que la technologie coplanaire ou des câbles coaxiaux dont l'âme extérieure est connectée au substrat.

**Revendications**

1. Antenne planaire réalisée sur un substrat (2) comportant une fente (1) de forme fermée dimensionnée pour fonctionner à une fréquence donnée et qui est placée dans un plan de court-circuit d'au moins une ligne d'alimentation (3,4), **caractérisée en ce que** le périmètre de la fente est choisi tel que $p = k\lambda s$ où k est un entier supérieur à 1 et $\lambda s$ la longueur d'onde guidée dans la fente et **en ce qu'**elle comporte au moins une première ligne (3) d'alimentation placée dans une zone de circuit ouvert de la fente et une seconde ligne (4) d'alimentation placée à une distance $d = (2n+1) \lambda s/4$ de la première ligne, avec n un entier supérieur ou égal à zéro.

2. Antenne selon la revendication 1, **caractérisée en ce que** chaque ligne d'alimentation est terminée par un circuit ouvert et est couplée avec la fente selon un couplage ligne/fente tel que la longueur de la ligne après la transition est égale à $(2k'+1)*\lambda m/4$ où $\lambda m$ est la longueur d'onde guidée sous la ligne, et $k'$ un entier positif ou nul.

3. Antenne selon la revendication 1, **caractérisée en ce que** chaque ligne d'alimentation est couplée avec la fente selon un couplage ligne/fente avec une ligne microruban terminée par un court circuit situé à $(2k'')*\lambda m/4$ où $\lambda m$ est la longueur d'onde guidée sous la ligne, et $k''$ un entier positif ou nul.

4. Antenne selon la revendication 1, **caractérisée en ce que** chaque ligne d'alimentation est couplée magnétiquement avec la fente selon une transition ligne/fente tangentielle.

5. Antenne selon l'une des revendications 1 à 3, **caractérisée en ce que** les lignes d'alimentation sont réalisées en technologie microruban, en technologie coplanaire ou par un câble coaxial.

6. Antenne selon l'une quelconque des revendications précédentes, **caractérisée en ce que** la fente est de forme annulaire (1), carrée (40), rectangulaire (10,20), polygonale (30), en forme de trèfle (50).

7. Antenne selon la revendication 6, **caractérisée en ce que**, dans le cas d'une fente de forme rectangulaire (20), les lignes d'alimentation (21,22) sont équidistantes d'un axe de symétrie (x,x') de la fente.

8. Antenne selon la revendication 6, **caractérisée en ce que**, dans le cas d'une fente de forme rectangulaire (20), une des lignes d'alimentation (21,22) est positionnée selon un axe de symétrie (x,x') de la fente.

9. Antenne selon l'une quelconque des revendications précédentes, **caractérisée en ce qu'**elle est connectée à des moyens d'alimentation en émission/réception permettant une diversité en réception.

**Claims**

1. Planar antenna realised on a substrate (2) comprising a slot (1) of closed shape dimensioned to operate at a given frequency in a short-circuit plane of at least one feed-line (3, 4), **characterized in that** the perimeter of the slot is selected such that $p = k\lambda s$ where k is an integer greater than 1 and $\lambda s$ the guided wavelength in the slot and **in that** it comprises at least a first feed-line (3) placed in an open circuit zone of the slot and a second feed-line (4) placed at a distance $d = (2n+1) \lambda s/4$ from the first line, where n is an integer greater than or equal to zero.

2. Antenna according to claim 1, **characterized in that** each feed-line terminates in an open circuit and is coupled to the slot according to a line/slot coupling such that the length of the line after the transition equals $(2k'+1)\lambda m/4$ where $\lambda m$ is the guided wave-

length under the line and k' a positive or null integer.

3. Antenna according to claim 1, **characterized in that** each feed-line is coupled to the slot according to a line/slot coupling with a microstrip line terminated by a short-circuit located at (2k'+1)λm/4 where λm is the guided wavelength under the line and k' a positive or null integer.

4. Antenna according to claim 1, **characterized in that** each feed-line is coupled magnetically to the slot according to a tangential line/slot transition.

5. Antenna according to one of claims 1 to 3, **characterized in that** the feed-lines are realised in microstrip technology, coplanar technology or by a coaxial cable.

6. Antenna according to any one of the above claims, **characterized in that** the shape of the slot is annular (1), square (40), rectangular (10, 20), polygonal (30), in a clover leaf form (50).

7. Antenna according to claim 6, **characterized in that** for a slot of rectangular shape (20), the feed-lines (21, 22) are equidistant from an axis of symmetry (x, x') of the slot.

8. Antenna according to claim 6, **characterized in that** for a slot of rectangular shape (20), one of the feed-lines (21, 22) is positioned according to an axis of symmetry (x, x') of the slot.

9. Antenna according to any one of the above claims, **characterized in that** it is connected to a transmission/reception means enabling a diversity of reception.

**Patentansprüche**

1. Planare Antenne, die auf einem Substrat (2) mit einem Schlitz in geschlossener Form (1) realisiert ist der dimensioniert ist, um bei einer vorgegebenen Frequenz zu funktionieren, und der in einer Ebene eines Kurzschlusses mindestens einer Versorgungsleitung (3, 4) angeordnet ist, **dadurch gekennzeichnet, dass** der Umfang des Schlitzes derart gewählt ist, dass p = kλs, wobei k eine ganze Zahl größer als 1 und λs die in dem Schlitz geführte Wellenlänge ist, und dass sie mindestens eine erste Versorgungsleitung (3), die in einem Bereich eines offenen Kreislaufs des Schlitzes angeordnet ist, und eine zweite versorgungsleitung (4), die in einem Abstand d = (2n+1)λs/4 zu der ersten Leitung angeordnet ist, aufweist, wobei n eine ganze Zahl ist, die größer als oder gleich Null ist.

2. Antenne nach Anspruch 1, **dadurch gekennzeichnet, dass** jede Versorgungsleitung mit einem offenen Kreislauf endet und mit dem Schlitz gemäß einer derartigen Leitung-Schlitz-Kopplung gekoppelt ist, dass die Länge der Leitung nach dem Übergang gleich (2k'+1)*λm/4 ist, wobei λm die unter der Leitung geführte Wellenlänge ist und k' eine ganze Zahl ist, die positiv oder gleich Null ist.

3. Antenne nach Anspruch 1, **dadurch gekennzeichnet, dass** jede Versorgungsleitung mit dem Schlitz gemäß einer Leitung-Schlitz-Kopplung mit einer Mikrostreifenleitung, die mit einem um (2k")*λm/4 beabstandeten Kurzschluss endet, gekoppelt ist, wobei λm die unter der Leitung geführte Wellenlänge ist und k" eine ganze Zahl ist, die positiv oder gleich Null ist.

4. Antenne nach Anspruch 1, **dadurch gekennzeichnet, dass** jede Versorgungsleitung magnetisch mit dem Schlitz gemäß einem tangentialen Leitung-Schlitz-Übergang gekoppelt ist.

5. Antenne nach einem der Ansprüche 1 bis 3, **dadurch gekennzeichnet, dass** die Versorgungsleitungen in Mikrostreifentechnologie, in Koplanartechnologie ausgeführt oder durch ein Koaxialkabel realisiert sind.

6. Antenne nach einem der vorhergehenden Ansprüche, **dadurch gekennzeichnet, dass** der Schlitz ringförmig (1), quadratisch (40), rechteckig (10, 20), polygonal (30), kleeblattförmig (50) ist.

7. Antenne nach Anspruch 6, **dadurch gekennzeichnet, dass** bei einem rechteckigen Schlitz (20) die Versorgungsleitungen (21, 22) abstandsgleich zu einer Symmetrieachse (x, x') des Schlitzes angeordnet sind.

8. Antenne nach Anspruch 6, **dadurch gekennzeichnet, dass** bei einem rechteckigen Schlitz (20) eine der Versorgungsleitungen (21, 22) nach einer Symmetrieachse (x, x') des Schlitzes positioniert ist.

9. Antenne nach einem der vorhergehenden Ansprüche, **dadurch gekennzeichnet, dass** sie mit Mitteln zur Sende- / Empfangsversorgung verbunden ist, die eine Empfangsdiversität ermöglichen.

FIG.1

FIG.2

(0,0) (90,90) (90,0)

## FIG.3a

(0,0) (90,90) (90,0)

## FIG.3b

Accès 2, f = 5.5 (GHz), E-total, théta = 95 (deg)
Accès 1, f = 5.5 (GHz), E-total, théta = 95 (deg)

0.0

30.0

30.0

60.0

60.0

(180-φ) 0.0 -4.0 -8.0 -12.0 -16.0 -20.0 -16.0 -12.0 -8.0 -4.0 0.0 φ

120.0

120.0

150.0

150.0

180.0

Schéma en Azimuth

## FIG.4

FIG. 5

FIG.6

FIG.7a

FIG.7b

—— Asymétriques S(1.1)
—— Asymétriques S(2.1)
—·—· Asymétriques S(2.2)

FIG.8a

—S(1.1)  —S(2.1) —·—S(2.2)

FIG.8b

FIG.9

_____ Asymétriques S(1.1)
▬▬▬ Asymétriques S(2.1)
—·—· Asymétriques S(2.2)

Fréquence(GHz)

FIG.10

FIG.11a

FIG.11b

Octogonale

Carrée

Tréfle

FIG.12

FIG.13

FIG.14